# EUROPÄISCHE PATENTSCHRIFT

(11) **EP 4 168 290 B1**
(45) Veröffentlichungstag und Bekanntmachung des Hinweises auf die Patenterteilung: **19.11.2025**
(21) Anmeldenummer: 21729423.0
(22) Anmeldetag: 21.05.2021
(51) Int. Cl.: B62D 15/02, B62D 5/04, B62D 6/00, B62D 6/04

(54) **VERFAHREN UND VORRICHTUNG ZUR BESTIMMUNG EINES KORREKTURWINKELS FÜR DIE GERADEAUSLAUFKORREKTUR EINES FAHRZEUGS**
METHOD AND DEVICE FOR DETERMINING A CORRECTION ANGLE FOR CORRECTING THE STRAIGHT-AHEAD TRAVEL OF A VEHICLE
PROCÉDÉ ET DISPOSITIF POUR DÉTERMINER UN ANGLE DE CORRECTION AFIN DE CORRIGER LE DÉPLACEMENT EN LIGNE DROITE D'UN VÉHICULE

(30) Priorität: 17.06.2020 DE 102020207518
(43) Veröffentlichungstag der Anmeldung: 26.04.2023
(73) Patentinhaber: VOLKSWAGEN AKTIENGESELLSCHAFT, 38440 Wolfsburg (DE)
(72) Erfinder: MAKKUS, Björn, 38108 Braunschweig (DE); SCHÄFER, Johannes Maria, 39615 Werben OT Berge (DE); LIESNER, Henrik, 38104 Braunschweig (DE); STREHLOW, Thomas, 38102 Braunschweig (DE)
(86) Internationale Anmeldenummer: PCT/EP2021/063585
(87) Internationale Veröffentlichungsnummer: WO 2021/254725

(56) Entgegenhaltungen:
- DE-A1- 102006 015 636
- DE-A1- 102006 018 974
- DE-B4- 112010 005 308

## Beschreibung

Die Erfindung betrifft ein Verfahren und eine Vorrichtung zur Bestimmung eines Korrekturwinkels für die Geradeauslaufkorrektur eines Fahrzeugs.

Es ist bekannt, dass für Fahrzeuge ein sogenannter Geradeauslauflenkwinkel bestimmt wird. Dies erfolgt, da aufgrund von Bauteil- und/oder Einbautoleranzen sowie aufgrund von betriebsbedingten Veränderungen von Bauteilen ein vom Fahrzeugführer an einer Lenkhandhabe eingestellter Geradeauslauflenkradwinkel nicht zwingend zu einer Geradeausfahrt des Fahrzeugs führt. Daher kann es notwendig sein, den bei einem Geradeauslauflenkradwinkel eingestellten Lenkwinkel von lenkbaren Rädern des Fahrzeugs zu korrigieren, um eine Geradeausfahrt des Fahrzeugs zu erreichen. Dieser Korrekturwinkel kann auch als Geradeauslauflenkwinkel bezeichnet werden.

Es existieren verschiedene Verfahren zur Bestimmung dieses Korrekturwinkels. So beschreibt die DE 10 2013 008 830 B3 ein Verfahren zur Erkennung einer Beschädigung eines Bauteils des Lenkstrangs eines Kraftfahrzeugs. In der Druckschrift ist weiter offenbart, dass ein tatsächlicher Geradeauslauf beispielsweise dadurch erkannt werden kann, dass keine Lenkkräfte auftreten. Alternativ kann eine Kamera genutzt werden, um einen Geradeauslauf zu erkennen. Weiter ist offenbart, dass der zeitlich meistgenutzte Lenkwinkel als Geradeauslauflenkwinkel bestimmt wird. Somit offenbart diese Druckschrift also Verfahren, die zur Bestimmung des quantitativen Werts des Geradeauslauflenkwinkels bzw. des Korrekturwinkels genutzt werden.

Weiter bekannt ist die DE 10 2010 028 140 A1, die ein Fahrerassistenzverfahren für ein Kraftfahrzeug mit einer Spurführungsassistenzfunktion offenbart. Diese Druckschrift offenbart, dass Daten von Umfeldsensoren des Kraftfahrzeugs, wie beispielsweise Kameras oder Radarsensoren, berücksichtigt werden können, um einen Zusatzwinkel zu bestimmen, der zur Überlagerung eines von dem Fahrer vorgegebenen Radlenkwinkels dient. Hierdurch kann der Fahrer bei der Fahrzeugführung unterstützt werden.

Ebenfalls als Stand der Technik bekannt ist die DE 10 2006 018 974 A1, die ein Verfahren zur Kalibrierung einer Gierratenmessung in einem Kraftfahrzeug offenbart. Die Druckschrift offenbart ein vorwärts gerichtetes Kamerasystem, das die Fahrzeugumgebung in Fahrtrichtung erfasst. Weiter offenbart ist, dass zur Erfassung des Gierwinkels mit einer hohen Genauigkeit zumindest eine erste Kalibrierung der gemessenen Gierrate im Stillstand und zumindest eine zweite Kalibrierung während der Fahrt durchgeführt wird, wobei diese insbesondere dann durchgeführt wird, wenn eine Geradeausfahrt festgestellt wurde. Die erläuterte Kamera dient der Erfassung der Umgebung vor dem Kraftfahrzeug und der Schätzung der Gierrate aus dem Verlauf der Fahrspur, wobei insbesondere eine Geradeausfahrt oder eine Kurvenfahrt abgeschätzt wird.

Die DE 11 2010 005 308 B4 offenbart eine gattungsgemäße Lenksteuervorrichtung, wobei ein Referenzpunkt einer Bewegung angepasst wird.

Die DE 10 2006 018 974 A1 offenbart ein Verfahren zur Kalibrierung einer Gierratenmessung in einem Kraftfahrzeug.

Es besteht das Problem, dass bei aktuellen Lernverfahren des Korrekturwinkels Umgebungsbedingungen, die von Idealbedingungen abweichen, zu einer unerwünscht ungenauen Bestimmung des Korrekturwinkels führen können. Beispielsweise kann, selbst wenn eine Geradeausfahrt des Fahrzeugs detektiert wurde, ein Schlagloch oder eine schiefe Fahrbahn dazu führen, dass ein ungenauer Korrekturwinkel bestimmt wird, insbesondere auch dann, wenn der Korrekturwinkel als im Mittel am meisten eingestellter Lenkwinkel ermittelt wird. So können z.B. Schlaglöcher dazu führen, dass der Fahrzeugführer eine kurze Zeit einen anderen Lenkwinkel bei tatsächlicher Geradeausfahrt einstellt, der dann Eingang in die Mittelung findet.

Somit stellt sich also das technische Problem, eine Verfahren und eine Vorrichtung zur Bestimmung eines Korrekturwinkels für die Geradeauslaufkorrektur eines Fahrzeugs zu schaffen, welche eine genauere Bestimmung dieses Winkels ermöglichen.

Die Lösung des technischen Problems ergibt sich durch die Gegenstände mit den Merkmalen der unabhängigen Ansprüche. Weitere vorteilhafte Ausgestaltungen der Erfindung ergeben sich aus den Unteransprüchen.

Vorgeschlagen wird ein Verfahren zur Bestimmung eines Korrekturwinkels für die Geradeauslaufkorrektur eines Fahrzeugs. Das Fahrzeug kann insbesondere ein Kraftfahrzeug sein. Der Korrekturwinkel bezeichnet hierbei einen Lenkwinkel, der eingestellt wird, wenn der Fahrzeugführer ein Fahrerassistenzsystem für eine Geradeausfahrt des Fahrzeugs wünscht. Ein solcher Wunsch kann z.B. durch die Einstellung eines Geradeauslauflenkradwinkels an einer Lenkhandhabe des Fahrzeugs, insbesondere durch den Fahrzeugführer, signalisiert werden.

In dem Verfahren erfolgt ein Lernen des Korrekturwinkels in Abhängigkeit mindestens einer Fahrzeugeigengröße. Eine Fahrzeugeigengröße kann insbesondere eine fahrdynamische Größe des Fahrzeugs, wie z.B. eine Beschleunigung, eine Geschwindigkeit, eine Gierrate oder eine weitere fahrdynamische Größe sein. Weiter kann eine Fahrzeugeigengröße ein aktuell eingestellter Lenkwinkel, ein aktuell eingestellter Lenkradwinkel oder ein aktuell anliegendes Lenkmoment sein. Die Fahrzeugeigengröße kann hierbei durch entsprechende Erfassungseinrichtungen, insbesondere Sensoren, erfasst werden. Schlussendlich ist es jedoch auch vorstellbar, dass die Fahrzeugeigengröße rechnerisch bestimmt wird, beispielsweise in Abhängigkeit von durch Sensoren erfasste weitere Fahrzeugeigengrößen.

Entsprechende Lernverfahren sind dem Fachmann bekannt. Ein beispielhaftes Lernverfahren ist die Erfassung/Bestimmung des zeitlich am meisten eingestellten Lenkwinkels, wobei in diesem Fall angenommen wird, dass der Korrekturwinkel diesem Lenkwinkel entspricht, da das Fahrzeug am meisten geradeaus fährt. Selbstverständlich kann der Fachmann jedoch auch zusätzlich oder alternativ andere Verfahren zum Lernen des Korrekturwinkels anwenden.

Erfindungsgemäß wird mindestens eine Fahrzeugumgebungsgröße bestimmt und mindestens ein umgebungsgrößenspezifisches Kriterium ausgewertet, wobei das Lernen nur dann durchgeführt wird, wenn das mindestens eine umgebungsgrößenspezifische Kriterium erfüllt ist. Exemplarische Fahrzeugumgebungsgrößen werden nachfolgend noch näher erläutert.

Bei der Auswertung des umgebungsgrößenspezifischen Kriteriums kann beispielsweise ausgewertet werden, ob die Fahrzeugumgebungsgröße oder ein diese Umgebungsgröße repräsentierender Wert kleiner als ein vorbestimmter Schwellwert, größer als ein vorbestimmter Schwellwert ist, in einem vorbestimmten Wertebereich oder außerhalb eines vorbestimmten Wertebereichs liegt. Ist dies der Fall, so ist das umgebungsgrößenspezifische Kriterium erfüllt. Ist dies nicht der Fall, so ist das umgebungsgrößenspezifische Kriterium nicht erfüllt. Zusätzlich zu schwellwertbasierten Kriterien können selbstverständlich auch andere Kriterien ausgewertet werden.

Ist das umgebungsgrößenspezifische Kriterium nicht erfüllt, so erfolgt kein Lernen des Korrekturwinkels. Ändert sich z.B. die mindestens eine Umgebungsgröße, insbesondere während einer Fahrt des Fahrzeugs, derart, dass das mindestens eine umgebungsgrößenspezifische Kriterium nicht mehr erfüllt ist, so kann das Lernen beendet oder unterbrochen werden. In diesem Fall kann der bis zu diesem Zeitpunkt gelernte Korrekturwinkel als erfindungsgemäß zu bestimmender Korrekturwinkel festgelegt werden. Ebenfalls kann der zu diesem Zeitpunkt gelernte Korrekturwinkel gespeichert werden. Ändert sich die Fahrzeugumgebungsgröße derart, dass das mindestens eine umgebungsgrößenspezifische Kriterium nach der Änderung erfüllt ist, so kann das Lernen neu begonnen oder fortgesetzt werden. Wird das Lernen fortgesetzt, so kann ein, insbesondere gespeicherter, Korrekturwinkel abgerufen und als Ausgangswert für das Lernen verwendet werden. Wird das Lernen neu begonnen, so kann ein vorbestimmter Initialwinkel als Ausgangswert verwendet werden.

Während des Lernens kann eine Veränderung des Korrekturwinkels erfolgen. Wird der Korrekturwinkel nicht gelernt, so erfolgt keine Veränderung des Korrekturwinkels.

Das Verfahren ermöglicht in vorteilhafter Weise, dass das Lernen nur dann durchgeführt wird, wenn in einer Fahrzeugumgebung Bedingungen herrschen, die eine möglichst genaue Bestimmung des Korrekturwinkels durch geeignete Lernverfahren ermöglichen. Beispielsweise kann das Lernen nur dann durchgeführt werden, wenn eine Fahrbahn eben und trocken ist und insbesondere keine Schlaglöcher aufweist. Weitere exemplarische Idealbedingungen werden nachfolgend im Zusammenhang mit ebenfalls nachfolgend erläuterten Fahrzeugumgebungsgrößen noch erläutert.

Hierdurch wird also in vorteilhafter Weise eine Genauigkeit bei der Bestimmung des Korrekturwinkels verbessert.

In einer bevorzugten Ausführungsform ist die Fahrzeugumgebungsgröße eine Fahrbahneigenschaft. Exemplarische Fahrbahneigenschaften werden nachfolgend noch näher erläutert. Da sich Fahrbahneigenschaften auf das Fahrverhalten des Fahrzeugs und auch auf die Fahrzeugführung durch einen Fahrzeugführer oder durch ein Fahrzeugassistenzsystem unmittelbar auswirken, ergibt sich somit in vorteilhafter Weise eine hohe Genauigkeit bei der Bestimmung, da insbesondere ein Lernen auf Fahrbahnen verhindert werden kann, deren Eigenschaften - wie vorhergehend erläutert - zu einer ungenauen Bestimmung des Korrekturwinkels führen können.

Alternativ ist die Fahrzeugumgebungsgröße eine Wetterinformation. Eine Wetterinformation kann beispielsweise eine Information über eine Regenstärke, eine Windstärke, eine Temperatur oder sonstige wettergrößenabhängige Größe sein. Hierdurch kann in vorteilhafter Weise vermieden werden, dass ein Korrekturwinkel während ungünstiger Wetterverhältnisse gelernt wird, die ebenfalls zu einer ungenauen Bestimmung führen können, beispielsweise während ein Fahrzeug dem Wind, insbesondere Seitenwind, ausgesetzt ist.

Weiter kann die Fahrzeugumgebungsgröße eine Verkehrsinformation sein. Eine solche Verkehrsinformation kann beispielsweise repräsentieren, ob wenig oder viel Verkehr auf der von dem Fahrzeug befahrenen Straße herrscht. Ist viel Verkehr vorhanden, so besteht eine höhere Wahrscheinlichkeit für Lenkeingriffe, die zur Abweichung von einer Geradeausfahrt führen, wodurch eine solche Situation eher ungeeignet für das Lernen des Korrekturwinkels ist. Umgekehrt ist bei wenig Verkehr eine gute Lernsituation zur Bestimmung des Korrekturwinkels gegeben.

Weiter alternativ ist die Fahrzeugumgebungsgröße ein Straßentyp der vom Fahrzeug befahrenen Straße. Ein Straßentyp kann beispielsweise eine Autobahn, eine Landstraße oder eine Stadtstraße sein. Weiter kann ein Straßentyp eine Straße innerhalb einer Ortschaft oder eine Straße außerhalb einer Ortschaft sein. Beispielsweise kann das Lernen nur dann erfolgen, wenn sich das Fahrzeug auf einer Autobahn oder auf einer Landstraße und/oder auf einer Straße außerhalb einer Ortschaft befindet. So kann davon ausgegangen werden, dass eine Fahrt auf einer Straße innerhalb einer Ortschaft häufige Lenkeingriffe des Fahrzeugführers benötigt, wodurch eine solche Fahrt nicht zum Lernen des Korrekturwinkels geeignet ist. Weiter kann angenommen werden, dass eine Fahrt auf einer Straße außerhalb einer Ortschaft, insbesondere auf einer Autobahn oder einer Landstraße, wenig oder keine Lenkeingriffe und somit Lenkwinkeländerungen erfordert, wodurch eine solche Fahrt besser zum Lernen des Korrekturwinkels geeignet ist. Somit ergibt sich also auch hierdurch in vorteilhafter Weise eine verbesserte Genauigkeit der Bestimmung des Korrekturwinkels.

Weiter kann die Fahrzeugumgebungsgröße eine Relativposition zwischen dem Fahrzeug und der Eigenspur und/oder einer von der Eigenspur verschiedenen Fahrspur sein. Die Position einer Fahrspur kann beispielsweise durch die Lage der zentralen Mittellinie der Fahrspur gegeben sein. So kann beispielsweise davon ausgegangen werden, dass bei einer Relativposition, die größer als ein vorbestimmter, insbesondere fahrspurbreitenabhängiger, Abstand ist, ein Lenkeingriff erfolgt oder mit einiger Wahrscheinlichkeit erfolgen wird, wodurch eine solche Situation ungeeignet zum Lernen des Korrekturwinkels ist und mit einiger Wahrscheinlichkeit keine exakte Geradeausfahrt des Fahrzeugs erfolgt. Umgekehrt kann davon ausgegangen werden, dass bei einer Relativposition, die kleiner als der vorbestimmte Schwellwert oder gleich diesem vorbestimmten Schwellwert ist, kein Lenkeingriff erfolgt bzw. mit hoher Wahrscheinlichkeit nicht erfolgen wird und eine für das Lernen des Korrekturwinkels günstige Fahrsituation vorliegt. Es ergibt sich also in vorteilhafter Weise eine Bestimmung des Korrekturwinkels mit guter Genauigkeit.

Weiter kann die Fahrzeugumgebungsgröße eine Relativposition zwischen dem Fahrzeug und weiteren Fahrzeugen sein, insbesondere von weiteren Fahrzeugen, die sich in Fahrtrichtung vor oder neben dem Fahrzeug befinden. Ist diese Relativposition z.B. kleiner als ein vorbestimmter Schwellwert, so kann davon ausgegangen werden, dass die Wahrscheinlichkeit für einen Lenkeingriff hoch ist, da der Fahrer aufgrund des geringen Abstands eher als bei einem großen Abstand auf ein z.B. verändertes Fahrverhalten der weiteren Fahrzeuge reagieren muss. Somit sind entsprechende Fahrsituationen eher ungeeignet für das Lernen des Korrekturwinkels. Umgekehrt kann davon ausgegangen werden, dass Relativpositionen, die größer als ein vorbestimmter Abstand oder gleich dem vorbestimmten Abstand sind, zu einer geringen Wahrscheinlichkeit für Lenkeingriffe und somit Veränderungen des Lenkwinkels führen, da ein Fahrzeugführer oder ein Fahrerassistenzsystem nicht auf ein Fahrverhalten weiterer Fahrzeuge reagieren muss. Somit ergibt sich eine besser für die Bestimmung des Korrekturwinkels geeignete Fahrsituation und eine genauere Bestimmung dieses Korrekturwinkels.

Selbstverständlich kann die Fahrzeugumgebungsgröße auch ein, insbesondere numerischer, Wert sein, der den vorhergehend erläuterten exemplarischen Größen repräsentiert.

In einer bevorzugten Ausführungsform ist die Fahrbahneigenschaft eine Fahrbahnkrümmung. So kann das umgebungsspezifische Kriterium beispielsweise dann erfüllt sein, wenn die Fahrbahnkrümmung kleiner als oder gleich einem vorbestimmten Krümmungsschwellwert ist, wobei eine Krümmung von null eine ungekrümmte Fahrbahn repräsentiert. In diesem Fall kann davon ausgegangen werden, dass ein Fahrzeugführer oder ein Fahrzeugassistenzsystem zum Steuern des Fahrzeugs auf der nicht oder nur wenig gekrümmten Fahrbahn keine oder nur wenig Eingriffe durchführen müssen, wodurch sich eine zum Lernen geeignete Situation ergibt.

Alternativ kann die Fahrbahneigenschaft eine Fahrbahnbreite sein. Beispielsweise kann das umgebungsgrößenspezifische Kriterium in diesem Fall dann erfüllt sein, wenn die Fahrbahnbreite größer als oder gleich einem vorbestimmten Schwellwert ist. In diesem Fall kann davon ausgegangen werden, dass ein Fahrzeugführer oder ein Fahrzeugassistenzsystem zum Steuern des Fahrzeugs zum Verbleib auf der ausreichend breiten Fahrbahn keine oder nur wenig Eingriffe durchführen müssen, wodurch sich eine zum Lernen geeignete Situation ergibt.

Weiter kann die Fahrbahneigenschaft eine Egofahrspurbreite sein. In diesem Fall kann das umgebungsgrößenspezifische Kriterium beispielsweise dann erfüllt sein, wenn die Egofahrspurbreite breiter als ein vorbestimmter Breitenschwellwert ist. In diesem Fall kann davon ausgegangen werden, dass ein Fahrzeugführer oder ein Fahrzeugassistenzsystem zum Verbleiben des Fahrzeugs in der Fahrspur keine oder nur wenig Eingriffe durchführen müssen, wodurch sich eine zum Lernen geeignete Situation ergibt.

Weiter kann die Fahrbahneigenschaft eine Art der Fahrbahnbegrenzung sein. Eine Art der Fahrbahnbegrenzung kann beispielsweise eine Leitplanke, eine Mauer oder ein Zustand ohne Begrenzung sein. Beispielsweise kann das umgebungsgrößenspezifische Kriterium in diesem Fall dann erfüllt sein, wenn keine Begrenzung der Fahrbahn vorhanden ist, da in diesem Fall davon ausgegangen werden kann, dass die Wahrscheinlichkeit für einen Lenkeingriff zur Vermeidung einer unerwünschten Kollision oder eines unerwünscht niedrigen Abstands zur Fahrbahnbegrenzung geringer als bei einer nicht vorhandenen Fahrbahnbegrenzung ist, wodurch sich die Situation gut zum Lernen eignet.

Weiter kann die Fahrbahneigenschaft ein Fahrbahnzustand sein. Ein Fahrbahnzustand kann beispielsweise einem der folgenden Zustände entsprechen: "vollständig intakt", "Schlaglöcher vorhanden", "eben", "geneigt", "geteert", "ungeteert". Selbstverständlich sind auch weitere Fahrbahnzustände vorstellbar. Ein weiterer Fahrbahnzustand kann z.B. "eisfrei" und/oder "vereist" sein. In diesem Fall kann das umgebungsgrößenspezifische Kriterium beispielsweise dann erfüllt sein, wenn der Fahrbahnzustand dem Zustand "intakt" und/oder "geteert" und/oder "eben" und/oder "eisfrei" entspricht. In diesem Fall kann davon ausgegangen werden, dass eine Wahrscheinlichkeit für Lenkeingriffe und somit eine Veränderung des Lenkwinkels im Vergleich zu anderen Fahrbahnzuständen reduziert ist, wodurch sich eine gute Situation zum Lernen des Korrekturwinkels ergibt.

Durch die Auswertung der erläuterten Fahrbahneigenschaften ergibt sich in vorteilhafter Weise eine zuverlässige Klassifizierung von guten Situationen für das Lernen des Korrekturwinkels, was zu einer genauen Bestimmung dieses Korrekturwinkels führt.

In einer weiteren Ausführungsform wird die Fahrzeugumgebungsgröße in Abhängigkeit von Ausgangssignalen in einer im Fahrzeug angeordneten Einrichtung zur Erfassung der Fahrzeugumgebung bestimmt. Diese Einrichtung kann insbesondere eine Bilderfassungseinrichtung, insbesondere eine Fahrzeugkamera, sein. Allerdings ist es auch vorstellbar, dass die Einrichtung ein Radarsensor ist oder umfasst. Auch kann die Einrichtung einen Lidarsensor umfassen oder als solcher ausgebildet sein. Auch kann die Einrichtung ein Ultraschallsensor sein oder umfassen. Hierdurch ergibt sich in vorteilhafter Weise eine zuverlässige und genaue Erfassung von Fahrzeugumgebungsgrößen, die insbesondere die aktuelle, tatsächliche Fahrzeugumgebung beschreiben.

Alternativ oderkumulativ kann die Fahrzeugumgebungsgröße in Abhängigkeit von Karteninformationen bestimmt werden. Hierzu kann beispielsweise eine Eigenposition des Fahrzeugs und in Abhängigkeit der Eigenposition aus Karteninformationen die Fahrzeugumgebungsgröße bestimmt werden. Beispielsweise kann in Abhängigkeit der Fahrzeugeigenposition und der Karteninformation der Straßentyp der vom Fahrzeug befahrenen Straße bestimmt werden. Weiter vorstellbar ist, dass eine Fahrbahnbreite, eine Fahrbahnkrümmung oder weitere Fahrzeugumgebungsgrößen in Abhängigkeit von Karteninformationen bestimmt werden. Derartige Karteninformationen können beispielsweise von einem Fahrzeugnavigationssystem bereitgestellt werden. So ist vorstellbar, dass die Karteninformationen auf einer Speichereinrichtung im Fahrzeug gespeichert sind. Selbstverständlich ist es jedoch auch vorstellbar, dass die Karteninformationen von einer fahrzeugexternen Einrichtung abgerufen werden, beispielsweise einer Servereinrichtung, insbesondere über geeignete Kommunikationseinrichtungen des Fahrzeugs.

Weiter alternativ oder kumulativ wird die Fahrzeugumgebungsgröße in Abhängigkeit von Fahrzeuginformationen weiterer Fahrzeuge, insbesondere von Fahrzeugen in einer vorbestimmten Umgebung des Fahrzeugs, bestimmt. Derartige Fahrzeuginformationen können beispielsweise über eine C2X-Kommunikation, insbesondere eine C2C- und/oder eine C2Infrastructure-Kommunikation, zum Fahrzeug übertragen werden. Beispielsweise kann auf diese Art und Weise eine Relativposition zwischen dem Fahrzeug und den weiteren Fahrzeugen bestimmt werden. Auch ist es vorstellbar, dass eine Fahrbahnkrümmung in Abhängigkeit von Verkehrsinformationen einer von weiteren Fahrzeugen befahrenen Trajektorie bestimmt wird. Ebenfalls ist es vorstellbar, dass hierdurch eine Verkehrsdichte oder eine andere Verkehrsinformation auf diese Weise bestimmt wird.

Weiter alternativ oder kumulativ wird die Fahrzeugumgebungsgröße in Abhängigkeit von auf fahrzeugexternen Speichereinrichtungen, insbesondere Servereinrichtungen, bereitgestellten Wetter- und/oder Verkehrsinformationen bestimmt. Weiter ist es vorstellbar, dass das Fahrzeug, insbesondere eine Recheneinrichtung zur Bestimmung der Fahrzeugumgebungsgröße, auf Cloud-Informationen, also durch eine Servereinrichtung im Internet bereitgestellten Informationen, zurückgreift, um eine Fahrzeugumgebungsgröße, beispielsweise die vorhergehend erläuterten Windverhältnisse oder Verkehrsverhältnisse, zu bestimmen.

Die genannten Ausführungen ermöglichen alle in vorteilhafter Weise eine zuverlässige und genaue Bestimmung der Fahrzeugumgebungsgröße.

In einer bevorzugten Ausführungsform ist die Einrichtung zur Erfassung der Fahrzeugumgebung eine Bilderfassungseinrichtung. Dies und entsprechende technische Vorteile wurden vorhergehend bereits erläutert.

In einer weiteren Ausführungsform wird zusätzlich mindestens eine Fahrzeugeigengröße bestimmt. Beispielhafte Fahrzeugeigengrößen wurden vorhergehend bereits erläutert. Weiter wird mindestens ein eigengrößenspezifisches Kriterium ausgewertet, wobei das Lernen nur dann durchgeführt wird, wenn zusätzlich zu dem mindestens einen umgebungsgrößenspezifischen Kriterium auch das wenigstens eine eigengrößenspezifische Kriterium erfüllt ist. Beispielsweise kann das Lernen in diesem Fall nur dann durchgeführt werden, wenn ein Absolutwert des Lenkwinkels kleiner als ein vorbestimmter Lenkwinkelschwellwert ist. Alternativ oder kumulativ kann das Lernen nur dann durchgeführt werden, wenn der Betrag des aktuell anliegenden Lenkmoments kleiner als ein vorbestimmter Lenkmoment-Schwellwert ist.

Hierdurch verbessert sich in vorteilhafter Weise die Genauigkeit bei der Bestimmung des Korrekturwinkels.

In einer weiteren Ausführungsform ist die Fahrzeugeigengröße ein Lenkwinkel, eine Lenkwinkelgeschwindigkeit, ein Handmoment, ein Lenkmoment, eine Fahrzeuggeschwindigkeit oder eine Gierrate.

Beispielsweise kann das eigengrößenspezifische Kriterium dann erfüllt sein, wenn eine Lenkwinkelgeschwindigkeit kleiner als ein vorbestimmter Lenkwinkelgeschwindigkeitsschwellwert ist und/oder falls ein aktuell anliegendes Handmoment an einer Lenkhandhabe kleiner als ein vorbestimmter Handmomentschwellwert ist und/oder falls eine Fahrzeuggeschwindigkeit größer als ein vorbestimmter Fahrzeuggeschwindigkeitsschwellwert ist und/oder die Gierrate kleiner als ein vorbestimmter Gierratenschwellwert ist. In allen Fällen kann davon ausgegangen werden, dass eine Geradeausfahrt des Fahrzeugs erfolgt und eine Wahrscheinlichkeit für einen Lenkeingriff gering ist, wodurch eine gute Situation zum Lernen vorliegt. Hierdurch ergibt sich wie vorhergehend erläutert eine genaue Bestimmung des Korrekturwinkels.

In einer weiteren Ausführungsform wird ein Korrekturwert für den gelernten Korrekturwinkel bestimmt, wenn das mindestens eine umgebungsgrößenspezifische Kriterium erfüllt ist und/oder wenn mindestens ein weiteres umgebungsgrößenspezifisches Kriterium erfüllt ist.

Weiter alternativ oder kumulativ wird der Korrekturwert bestimmt, wenn mindestens ein eigengrößenspezifisches Kriterium erfüllt ist, insbesondere das vorhergehend erläuterte eigengrößenspezifische Kriterium oder ein weiteres eigengrößenspezifisches Kriterium.

Weiter wird der gelernte Korrekturwinkel in Abhängigkeit des Korrekturwert korrigiert.

Dieser Korrekturwert kann beispielsweise durch eine Auswertung eines vorbestimmten funktionellen Zusammenhangs zwischen dem Korrekturwert und mindestens einer Fahrzeugumgebungsgröße und/oder mindestens einer Fahrzeugeigengröße bestimmt werden. Selbstverständlich ist es auch vorstellbar, vorbestimmte Zuordnungsvorschriften auszuwerten, die einer Fahrzeugumgebungsgröße und/oder mindestens einer Fahrzeugeigengröße einen Korrekturwert zuordnen. Hierdurch kann in vorteilhafter Weise die Genauigkeit der Bestimmung des Korrekturwinkels weiter verbessert werden. Insbesondere wird der Korrekturwert somit nicht mehr ausschließlich durch das Lernverfahren bestimmt, welches bei Vorliegen vorbestimmter Bedingungen durchgeführt wird, sondern gleichzeitig oder in bestimmten Fällen ein Korrekturwert für einen unter diesen Bedingungen gelernten Korrekturwinkel bestimmt, wobei dann der Korrekturwinkel in Abhängigkeit des gelernten Korrekturwinkels und des Korrekturwerts bestimmt wird, beispielsweise durch Addition oder Subtraktion dieser Größen.

Ist das mindestens eine umgebungsgrößenspezifische Kriterium und/oder das mindestens eine weitere umgebungsgrößenspezifische Kriterium und/oder das mindestens eine eigengrößenspezifische Kriterium nicht erfüllt, so wird kein Korrekturwert für den gelernten Korrekturwinkel bestimmt. Alternativ kann auch in diesem Fall ein Korrekturwert bestimmt werden, wobei dann jedoch der gelernte Korrekturwinkel nicht korrigiert wird.

In einer weiteren Ausführungsform wird der Korrekturwert in Abhängigkeit eines aktuellen Lenkwinkels, eines aktuellen Korrekturwinkels, einer Fahrbahnkrümmung, eines Gierwinkelfehlers oder einer Assistenzsystem-Stellgröße bestimmt. Hierbei kann ein Gierwinkelfehler ein Maß repräsentieren, in wie weit ein aktueller Gierwinkel nicht zu einer aktuellen Ausrichtung einer Fahrzeuglängsachse, insbesondere relativ zu einer Fahrspurmittellinie, passt, insbesondere also um mehr als ein vorbestimmtes Maß davon abweicht. Eine Assistenzsystem-Stellgröße kann insbesondere eine Stellgröße sein, die von einem querführenden Fahrzeugassistenzsystem erzeugt wird und einen das Fahrzeug querführenden Eingriff bewirkt.

Die vorhergehend erläuterten Größen können einen Einfluss auf den gelernten Korrekturwinkel haben, der die Bestimmung in einem Lernverfahren (leicht) verfälscht. So kann z.B. eine leichte Fahrbahnkrümmung den gelernten Korrekturwinkel verfälschen, selbst wenn die Lernbedingung erfüllt ist. Die Berücksichtigung des Einflusses einer oder mehrerer dieser Größen in Form eines Korrekturwerts zur Korrektur des Korrekturwinkels verbessert in vorteilhafter Weise die Genauigkeit der Bestimmung.

Weiter vorgeschlagen wird eine Vorrichtung zur Bestimmung eines Korrekturwinkels eines Fahrzeugs. Die Vorrichtung umfasst mindestens eine Recheneinrichtung, die insbesondere als Mikrocontroller oder integrierte Schaltung ausgebildet oder eine solche(n) umfassen kann. Weiter umfasst die Vorrichtung mindestens eine Einrichtung zur Bestimmung einer Fahrzeugeigengröße. Diese Einrichtung kann insbesondere auch eine Einrichtung zur Erfassung der Fahrzeugeigengröße, beispielsweise ein Sensor, sein. Weiter umfasst die Vorrichtung mindestens eine Einrichtung zur Bestimmung einer Fahrzeugumgebungsgröße. Auch diese kann eine Einrichtung zur Erfassung der Fahrzeugumgebungsgröße sein, beispielsweise ein Sensor, insbesondere die vorhergehend erläuterte Fahrzeugkamera. Die Einrichtungen zur Bestimmung können hierbei daten- und/oder signaltechnisch mit der Recheneinrichtung verbunden sein.

Ebenfalls ist es möglich, dass die Einrichtung zur Bestimmung der Fahrzeugeigengröße und/oder die Einrichtung zur Bestimmung der Fahrzeugumgebungsgröße eine Kommunikationseinrichtung zur Datenübertragung zwischen der Einrichtung und einer fahrzeugexternen Einrichtung, beispielsweise einer Servereinrichtung oder einer Kommunikationseinrichtung eines weiteren Fahrzeugs oder einer straßenseitigen Einrichtung umfasst.

Weiter wird durch die Recheneinrichtung ein Lernen des Korrekturwinkels in Abhängigkeit mindestens einer Fahrzeugeigengröße durchgeführt. Dies wurde vorhergehend bereits erläutert.

Erfindungsgemäß wird mindestens eine Fahrzeugumgebungsgröße bestimmt, insbesondere durch die Einrichtung zur Bestimmung der Fahrzeugumgebungsgröße. Weiter wird mindestens ein umgebungsgrößenspezifisches Kriterium ausgewertet, insbesondere durch die Recheneinrichtung. Weiter erfolgt das Lernen nur dann, wenn das mindestens eine umgebungsgrößenspezifische Kriterium erfüllt ist.

Die Vorrichtung ist somit derart konfiguriert, dass ein Verfahren gemäß einer der in dieser Offenbarung erläuterten Ausführungsformen mit entsprechenden technischen Vorteilen durch die Vorrichtung ausgeführt werden kann.

Weiter beschrieben wird ein Fahrzeug, insbesondere ein Kraftfahrzeug, mit einer solchen Vorrichtung.

Die Erfindung wird anhand von Ausführungsbeispielen näher erläutert. Die Figuren zeigen:
- Fig. 1: ein schematisches Flussdiagramm eines erfindungsgemäßen Verfahrens,
- Fig. 2: ein schematisches Flussdiagramm eines erfindungsgemäßen Verfahrens in einer weiteren Ausführungsform,
- Fig. 3: ein schematisches Schaubild eines erfindungsgemäßen Verfahrens und
- Fig. 4: ein schematisches Schaubild eines erfindungsgemäßen Verfahrens in einer weiteren Ausführungsform.

Nachfolgend bezeichnen gleiche Bezugszeichen Elemente mit gleichen technischen Eigenschaften oder Merkmalen.

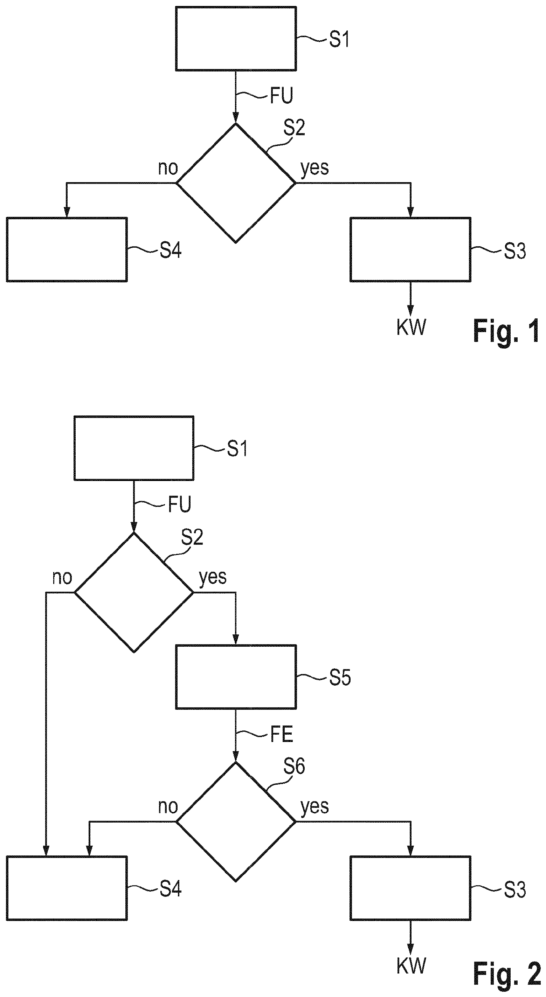

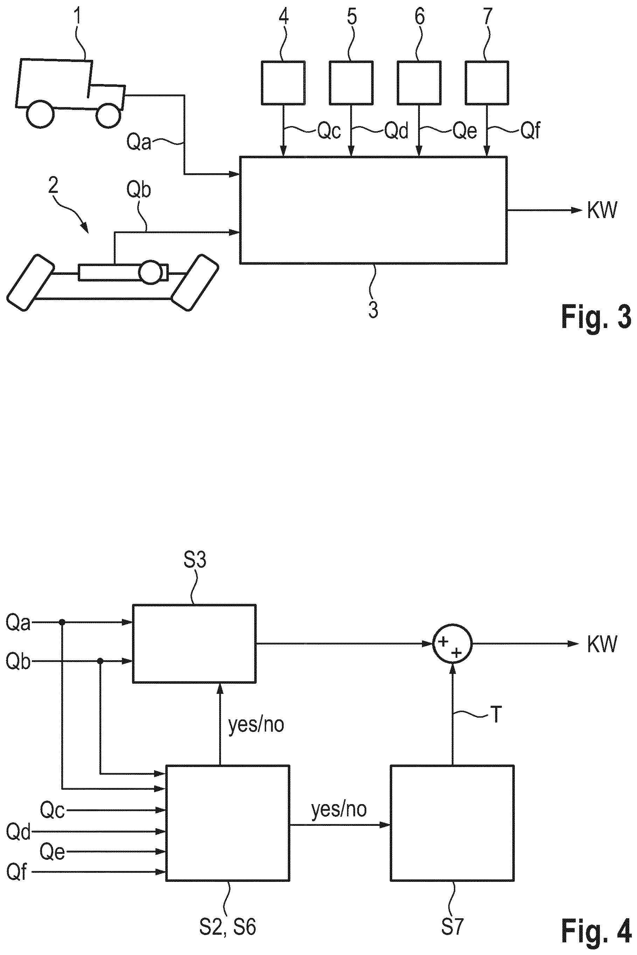

Fig. 1 zeigt ein schematisches Flussdiagramm eines erfindungsgemäßen Verfahrens zur Bestimmung eines Korrekturwinkels KW für die Geradeauslaufkorrektur eines Fahrzeugs 1 (siehe Fig. 3). Es erfolgt ein Bestimmen S1 mindestens einer Fahrzeugumgebungsgröße FU, insbesondere in einem ersten Schritt des Verfahrens. Weiter erfolgt ein Auswerten S2 eines umgebungsgrößenspezifischen Kriteriums. Wird das umgebungsgrößenspezifische Kriterium erfüllt, erfolgt ein Lernen S3 des Korrekturwinkels KW in Abhängigkeit einer Fahrzeugeigengröße FE (siehe Fig. 2). Diese Fahrzeugeigengröße FE kann hierbei vor dem Lernen S3 ermittelt oder erfasst werden.

Exemplarische Fahrzeugeigengrößen FE und exemplarische Fahrzeugumgebungsgrößen FU wurden vorhergehend bereits erläutert. Ist das umgebungsgrößenspezifische Kriterium nicht erfüllt, so erfolgt ein Verwenden S4 eines vorbestimmten Korrekturwinkels, der beispielsweise ein vorher bereits gelernter und abgespeicherter Korrekturwinkel KW oder ein vorgegebener Referenzwert sein kann.

Fig. 2 zeigt ein schematisches Flussdiagramm eines erfindungsgemäßen Verfahrens zur Bestimmung eines Korrekturwinkels KW in einer weiteren Ausführungsform. Hierbei entspricht das Bestimmen S1 der Fahrzeugumgebungsgröße FU und das Auswerten S2 des umgebungsgrößenspezifischen Kriteriums dem in Fig. 1 dargestellten Bestimmen S1 bzw. bzw. Auswerten S2.

Ist das umgebungsgrößenspezifische Kriterium erfüllt, erfolgt ein Bestimmen S5 einer Fahrzeugeigengröße FE und dann ein Auswerten S6 eines eigengrößenspezifischen Kriteriums. Ist das eigengrößenspezifische Kriterium erfüllt, so erfolgt ein Lernen S3 des Korrekturwinkels KW mit einem dem Fachmann bekannten Lernverfahren. Ist das umgebungsgrößenspezifische Kriterium oder das eigengrößenspezifische Kriterium nicht erfüllt, so erfolgt das vorhergehend erläuterte Verwenden S4 eines bereits gelernten Korrekturwinkels oder eines Referenzwerts.

Hierbei ist die in Fig. 2 dargestellte Abfolge des Bestimmens S1 der Fahrzeugumgebungsgröße FU, des Bestimmens S5 der Fahrzeugeigengröße FE sowie das Auswerten S2, S6 der entsprechenden Kriterien exemplarisch und nicht zwingend in der dargestellten Reihenfolge auszuführen. So ist es möglich, dass das Bestimmen S1 der Fahrzeugumgebungsgröße FU und das Bestimmen S5 der Fahrzeugeigengröße FE zeitlich parallel erfolgt oder dass die Fahrzeugeigengröße FE zeitlich vor der Fahrzeugumgebungsgröße FU bestimmt wird. Entsprechendes gilt für die Auswertung S2, S6 der entsprechenden Kriterien.

Mit dem Verwenden S4 eines bisher gelernten Korrekturwinkels KW kann das Verfahren zum Bestimmen S1 der Fahrzeugumgebungsgröße FU zurückkehren. Das Lernen S3 des Korrekturwinkels KW kann unterbrochen werden, wenn die Fahrzeugumgebungsgröße FU und gegebenenfalls die Fahrzeugeigengröße FE sich derart ändern, dass die entsprechenden Kriterien/das entsprechende Kriterium nicht mehr erfüllt ist.

Der in Fig. 1 und Fig. 2 dargestellte bestimmte Korrekturwinkel KW kann gespeichert werden und dann insbesondere von Fahrzeugassistenzsystemen verwendet werden, um eine gewünschte Fahrzeugassistenzsystem-Funktion durchzuführen.

Fig. 3 zeigt ein schematisches Schaubild der erfindungsgemäßen Vorrichtung 2. Schematisch dargestellt ist ein Fahrzeug 1, wobei die Vorrichtung 2 in dem Fahrzeug 1 verbaut sein kann. Dargestellt ist, dass Ausgangssignale Qa von nicht dargestellten Einrichtungen zur Erfassung einer Fahrzeugeigengröße FE oder einer davon abhängigen Größe (siehe Fig. 2) an eine Recheneinrichtung 3 übertragen werden. Die Ausgangssignale Qa können beispielsweise Ausgangssignale eines Geschwindigkeitssensors oder eines Gierratensernsors sein. Die Übertragung kann beispielsweise über ein Bussystem des Fahrzeugs 1, beispielsweise einen CAN-Bus, erfolgen.

Ebenfalls dargestellt ist, dass Ausgangssignale Qb von lenkungsspezifischen Fahrzeugeigengrößen FE, wie z.B. Ausgangssignale eines Lenkwinkelsensors, eines Lenkwinkelgeschwindigkeitssensors, eines Handmomentsensors oder eines Lenkmomentsensors, an die Recheneinrichtung 3 übertragen werden. Selbstverständlich ist es auch vorstellbar, dass die in Fig. 3 dargestellten Ausgangssignale Qa, Qb, die fahrzeugeigengrößenabhängig sind oder Fahrzeugeigengrößen FE repräsentieren, nicht durch einen entsprechenden Sensor erfasst, sondern in Abhängigkeit von anderen Größen bestimmt werden.

Schematisch dargestellt ist weiter ein Navigationssystem 4 des Fahrzeugs 1. Dieses überträgt Ausgangssignale Qc, beispielsweise Karteninformationen und somit Informationen über eine Umgebung der Fahrzeugeigenposition an die Recheneinrichtung 3. Ebenfalls dargestellt ist eine Servereinrichtung 5, die Ausgangssignale Qd an die Recheneinrichtung 3 überträgt, wobei diese Ausgangssignale Qd beispielsweise Verkehrs- und/oder Wetterinformationen enthalten bzw. codieren. Weiter dargestellt ist eine weitere Servereinrichtung 6, in der Informationen von weiteren Fahrzeugen (nicht dargestellt), beispielsweise sogenannte Road Experience Informationen, gespeichert sind, wobei diese in Form von Ausgangssignalen Qe an die Recheneinrichtung 3 übertragen werden können. Weiter dargestellt ist eine Einrichtung 7 zur Erfassung einer Fahrzeugumgebung, die ebenfalls im Fahrzeug 1 angeordnet und die beispielsweise als Fahrzeugkamera ausgebildet sein kann. Ausgangssignale Qf dieser Einrichtung 7 werden ebenfalls an die Recheneinrichtung 3 übertragen. In Abhängigkeit der Ausgangssignale Qa, Qb, die fahrzeugeigengrößenabhängig sind, kann mindestens eine Fahrzeugeigengröße FE bestimmt werden. In Abhängigkeit mindestens eines der Ausgangssignale Qc, Qd, Qe, Qf kann mindestens eine Fahrzeugumgebungsgröße FU bestimmt werden. Dann kann die Recheneinrichtung, wie vorhergehend in Bezug auf Fig. 1 und Fig. 2 erläutert, einen Korrekturwinkel KW bestimmen und hierzu insbesondere die entsprechenden Kriterien auswerten.

Fig. 4 zeigt ein schematisches Diagramm eines erfindungsgemäßen Verfahrens in einer weiteren Ausführungsform. Hierbei ist dargestellt, dass ein Lernen S3 des Korrekturwinkels KW in Abhängigkeit der in Fig. 3 dargestellten Ausgangssignale Qa, Qb, die fahrzeugeigengrößenabhängig sind, erfolgt. Weiter dargestellt ist, dass das Auswerten S2, S6 der Fahrzeugeigengröße FE und der mindestens einen Fahrzeugumgebungsgröße FU (siehe Fig. 2) erfolgt, wobei diese in Abhängigkeit der fahrzeugeigengrößenabhängigen Ausgangssignale Qa, Qb und der fahrzeugumgebungsgrößenabhängigen Ausgangssignale Qc, Qd, Qe, Qf bestimmt werden. In Abhängigkeit dieser Auswertung wird das Lernen S3 des Korrekturwinkels KW durchgeführt oder nicht.

Weiter dargestellt ist das Bestimmen S7 eines Korrekturwerts T für den Korrekturwinkel KW. Das Bestimmen wird ebenfalls nur dann durchgeführt, wenn mindestens ein fahrzeugumgebungsgrößenspezifisches Kriterium und mindestens ein entsprechendes fahrzeugeigengrößenspezifisches Kriterium erfüllt sind. Das Bestimmen S7 erfolgt insbesondere in Abhängigkeit eines aktuellen Lenkwinkels, eines aktuellen Korrekturwinkels, einer Fahrbahnkrümmung, eines Gierwinkelfehlers und einer Assistenzsystem-Stellgröße. Ferner ist dargestellt, dass der beim Lernen S3 bestimmte Korrekturwert KW durch den Korrekturwert T korrigiert wird. Nicht dargestellt ist, dass der Korrekturwert T ebenfalls in Abhängigkeit der dargestellten fahrzeugeigengrößenabhängigen Ausgangssignale Qa, Qb und/oder in Abhängigkeit der dargestellten fahrzeugumgebungsgrößenabhängigen Ausgangssignale Qc, Qd, Qe, Qf bestimmt werden kann.

Es ist möglich, dass das Bestimmen S7 des Korrekturwerts T aktivierbar oder deaktivierbar ist. In einem deaktivierten Zustand erfolgt keine Bestimmung eines Korrekturwerts T und somit auch keine Korrektur des beim Lernen S3 bestimmten Korrekturwinkels KW, selbst wenn die vorhergehend erläuterten Kriterien erfüllt sind. In einem aktivierten Zustand erfolgt das Bestimmen des Korrekturwerts T und die Korrektur dann, wenn die vorhergehend erläuterten Kriterien erfüllt sind. Sind diese nicht erfüllt, so erfolgt keine Bestimmung und keine Korrektur trotz des aktivierten Zustands.

### Bezugszeichenliste

- S1: Bestimmen
- S2: Auswerten
- S3: Lernen
- S4: Verwenden
- S5: Bestimmen einer Fahrzeugeigengröße
- S6: Auswerten eines fahrzeugeigengrößenspezifischen Kriteriums
- S7: Bestimmen eines Korrekturwerts
- KW: Korrekturwinkel
- T: Korrekturwert
- Qa, Qb: fahrzeugeigengrößenabhängige Ausgangssignale
- Qc, Qd, Qe, Qf: fahrzeugumgebungsgrößenabhängige Ausgangssignale
- 1: Fahrzeug
- 2: Vorrichtung
- 3: Recheneinrichtung
- 4: Navigationssystem
- 5: Servereinrichtung
- 6: weitere Servereinrichtung
- 7: Einrichtung zur Erfassung der Fahrzeugumgebung

## Patentansprüche

1. Verfahren zur Bestimmung eines Korrekturwinkels (KW) für die Geradeauslaufkorrektur eines Fahrzeugs (1), wobei ein Lernen (S3) des Korrekturwinkels (KW) in Abhängigkeit mindestens einer Fahrzeugeigengröße (FE) erfolgt,
**dadurch gekennzeichnet, dass**
mindestens eine Fahrzeugumgebungsgröße (FU) bestimmt wird und mindestens ein umgebungsgrößenspezifisches Kriterium ausgewertet wird, wobei das Lernen (S3) nur dann durchgeführt wird, wenn das mindestens eine umgebungsgrößenspezifische Kriterium erfüllt ist.

2. Verfahren nach Anspruch 1, **dadurch gekennzeichnet, dass** die
Fahrzeugumgebungsgröße (FU) eine Fahrbahneigenschaft, eine Wetterinformation, eine Verkehrsinformation, ein Straßentyp der vom Fahrzeug (1) befahrenen Straße, eine Relativposition zwischen dem Fahrzeug (1) und der Eigenspur und/oder einer von der Eigenspur verschiedenen Fahrspur oder eine Relativposition zwischen dem Fahrzeug (1) und einem weiteren Fahrzeug ist oder repräsentiert.

3. Verfahren nach Anspruch 2, **dadurch gekennzeichnet, dass** die Fahrbahneigenschaft eine Fahrbahnbreite, eine Egofahrspurbreite, eine Fahrbahnkrümmung, eine Art der Fahrbahnbegrenzung oder ein Fahrbahnzustand ist.

4. Verfahren nach einem der vorangegangenen Ansprüche, **dadurch gekennzeichnet, dass** die Fahrzeugumgebungsgröße (FU) in Abhängigkeit von Ausgangssignalen (Qf) einer im Fahrzeug angeordneten Einrichtung zur Erfassung der Fahrzeugumgebung und/oder in Abhängigkeit von Karteninformationen und/oder in Abhängigkeit einer Verkehrsinformation und/oder in Abhängigkeit von Fahrzeuginformationen weiterer Fahrzeuge und/oder in Abhängigkeit von auf fahrzeugexternen Speichereinrichtungen bereitgestellten Wetter- und/oder Verkehrsinformationen bestimmt wird.

5. Verfahren nach Anspruch 4, **dadurch gekennzeichnet, dass** die Einrichtung zur Erfassung der Fahrzeugumgebung eine Bilderfassungseinrichtung (7) ist.

6. Verfahren nach einem der vorangegangenen Ansprüche, **dadurch gekennzeichnet, dass** zusätzlich mindestens eine Fahrzeugeigengröße (FE) bestimmt wird und mindestens ein eigengrößenspezifisches Kriterium ausgewertet wird, wobei das Lernen (S3) nur dann durchgeführt wird, wenn zusätzlich das mindestens eine eigengrößenspezifische Kriterium erfüllt ist.

7. Verfahren nach Anspruch 6, **dadurch gekennzeichnet, dass** die Fahrzeugeigengröße (FE) ein Lenkwinkel, eine Lenkwinkelgeschwindigkeit, ein Handmoment, ein Lenkmoment, eine Fahrzeuggeschwindigkeit oder eine Gierrate ist.

8. Verfahren nach einem der vorangegangenen Ansprüche, **dadurch gekennzeichnet, dass** ein Korrekturwert (T) für den gelernten Korrekturwinkel (KW) bestimmt wird, wenn das mindestens eine umgebungsgrößenspezifische Kriterium erfüllt ist und/oder wenn mindestens ein weiteres umgebungsgrößenspezifische Kriterium erfüllt ist und/oder wenn mindestens ein eigengrößenspezifisches Kriterium erfüllt ist.

9. Verfahren nach Anspruch 8, **dadurch gekennzeichnet, dass** der Korrekturwert (T) in Abhängigkeit eines aktuellen Lenkwinkels, eines aktuellen Korrekturwinkels, einer Fahrbahnkrümmung, eines Gierwinkelfehlers oder einer Assistenzsystem-Stellgröße bestimmt wird.

10. Vorrichtung zur Bestimmung eines Korrekturwinkels (KW) eines Fahrzeugs (1), wobei die Vorrichtung (2) mindestens eine Recheneinrichtung (3), mindestens eine Einrichtung zur Bestimmung einer Fahrzeugeigengröße (FE) und mindestens eine Einrichtung zur Bestimmung einer Fahrzeugumgebungsgröße (FU) umfasst, wobei durch die Recheneinrichtung (3) ein Lernen (S3) des Korrekturwinkels (KW) in Abhängigkeit mindestens einer Fahrzeugeigengröße (FE) durchgeführt wird,
**dadurch gekennzeichnet, dass**
mindestens eine Fahrzeugumgebungsgröße (FU) bestimmt wird und mindestens ein umgebungsgrößenspezifisches Kriterium ausgewertet wird, wobei das Lernen (S3) nur dann durchgeführt wird, wenn das mindestens eine umgebungsgrößenspezifische Kriterium erfüllt ist.

## Claims

1. Method for determining a correction angle (KW) for the straight-ahead travel correction of a vehicle (1), a learning (S3) of the correction angle (KW) taking place on the basis of at least one vehicle intrinsic variable (FE),
**characterized in that**
at least one vehicle environment variable (FU) is determined and at least one environment-variable-specific criterion is evaluated, the learning (S3) only being carried out if the at least one environment-variable-specific criterion is met.

2. Method according to claim 1, **characterized in that** the vehicle environment variable (FU) is or represents a roadway property, weather information, traffic information, a road type of the road traveled by the vehicle (1), a relative position between the vehicle (1) and the intrinsic lane and/or a traffic lane different from the intrinsic lane, or a relative position between the vehicle (1) and another vehicle.

3. Method according to claim 2, **characterized in that** the roadway property is a roadway width, an ego traffic lane width, a roadway curvature, a type of roadway boundary, or a roadway condition.

4. Method according to any of the preceding claims, **characterized in that** the vehicle environment variable (FU) is determined on the basis of output signals (Qf) of a device arranged in the vehicle for detecting the vehicle environment and/or on the basis of map information and/or on the basis of traffic information and/or on the basis of vehicle information of other vehicles and/or on the basis of weather and/or traffic information provided on vehicle-external storage devices.

5. Method according to claim 4, **characterized in that** the device for detecting the vehicle environment is an image capture device (7).

6. Method according to any of the preceding claims, **characterized in that** in addition, at least one vehicle intrinsic variable (FE) is determined and at least one intrinsic-variable-specific criterion is evaluated, the learning (S3) only being carried out if the at least one intrinsic-variable-specific criterion is additionally met.

7. Method according to claim 6, **characterized in that** the vehicle intrinsic variable (FE) is a steering angle, a steering angular velocity, a manual torque, a steering torque, a vehicle speed or a yaw rate.

8. Method according to any of the preceding claims, **characterized in that** a correction value (T) for the learned correction angle (KW) is determined if the at least one environment-variable-specific criterion is met and/or if at least one further environment-variable-specific criterion is met and/or if at least one intrinsic-variable-specific criterion is met.

9. Method according to claim 8, **characterized in that** the correction value (T) is determined on the basis of a current steering angle, a current correction angle, a roadway curvature, a yaw angle error or an assistance system correcting variable.

10. Apparatus for determining a correction angle (KW) of a vehicle (1), the apparatus (2) comprising at least one computing device (3), at least one device for determining a vehicle intrinsic variable (FE) and at least one device for determining a vehicle environment variable (FU), the computing device (3) carrying out a learning (S3) of the correction angle (KW) on the basis of at least one vehicle intrinsic variable (FE),
**characterized in that**
at least one vehicle environment variable (FU) is determined and at least one environment-variable-specific criterion is evaluated, the learning (S3) only being carried out if the at least one environment-variable-specific criterion is met.

## Revendications

1. Procédé pour la détermination d'un angle de correction (KW) pour la correction de la trajectoire rectiligne d'un véhicule (1), dans lequel un apprentissage (S3) de l'angle de correction (KW) est effectué en fonction d'au moins une grandeur propre de véhicule (FE),
**caractérisé en ce que**
au moins une grandeur d'environnement de véhicule (FU) est déterminée et au moins un critère spécifique à la grandeur d'environnement est évalué, dans lequel l'apprentissage (S3) n'est effectué que si l'au moins un critère spécifique à la grandeur d'environnement est satisfait.

2. Procédé selon la revendication 1, **caractérisé en ce que** la grandeur d'environnement de véhicule (FU) est ou représente une caractéristique de chaussée, des informations météorologiques, des informations de trafic, un type de route de la route empruntée par le véhicule (1), une position relative entre le véhicule (1) et la voie propre et/ou une voie de circulation différente de la voie propre ou une position relative entre le véhicule (1) et un autre véhicule.

3. Procédé selon la revendication 2, **caractérisé en ce que** la caractéristique de chaussée est une largeur de chaussée, une largeur de voie de circulation propre, une courbure de chaussée, un type de limite de chaussée ou un état de chaussée.

4. Procédé selon l'une des revendications précédentes,
**caractérisé en ce que** la grandeur d'environnement de véhicule (FU) est déterminée en fonction de signaux de sortie (Qf) d'un appareil disposé dans le véhicule et permettant de détecter l'environnement du véhicule et/ou en fonction d'informations cartographiques et/ou en fonction d'informations de trafic et/ou en fonction d'informations de véhicules d'autres véhicules et/ou en fonction d'informations météorologiques et/ou de trafic mises à disposition sur des appareils de mémorisation externes au véhicule.

5. Procédé selon la revendication 4, **caractérisé en ce que** l'appareil permettant de détecter l'environnement du véhicule est un appareil de capture d'image (7).

6. Procédé selon l'une des revendications précédentes,
**caractérisé en ce qu'**au moins une grandeur propre de véhicule (FE) est en outre déterminée et au moins un critère spécifique à la grandeur propre est évalué, dans lequel l'apprentissage (S3) n'est effectué que si en outre l'au moins un critère spécifique à la grandeur propre est en outre satisfait.

7. Procédé selon la revendication 6, **caractérisé en ce que** la grandeur propre de véhicule (FE) est un angle de braquage, une vitesse d'angle de braquage, un couple manuel, un couple de braquage, une vitesse de véhicule ou un taux de lacet.

8. Procédé selon l'une des revendications précédentes,
**caractérisé en ce qu'**une valeur de correction (T) pour l'angle de correction (KW) appris est déterminée lorsque l'au moins un critère spécifique à la grandeur d'environnement est satisfait et/ou lorsqu'au moins un autre critère spécifique à la grandeur d'environnement est satisfait et/ou lorsqu'au moins un critère spécifique à la grandeur propre est satisfait.

9. Procédé selon la revendication 8, **caractérisé en ce que** la valeur de correction (T) est déterminée en fonction d'un angle de braquage actuel, d'un angle de correction actuel, d'une courbure de chaussée, d'une erreur d'angle de lacet ou d'une grandeur de réglage de système d'assistance.

10. Dispositif permettant de déterminer un angle de correction (KW) d'un véhicule (1), dans lequel le dispositif (2) comprend au moins un appareil de calcul (3), au moins un appareil permettant de déterminer une grandeur propre de véhicule (FE) et au moins un appareil permettant de déterminer une grandeur d'environnement de véhicule (FU), dans lequel un apprentissage (S3) de l'angle de correction (KW) est effectué par l'appareil de calcul (3) en fonction d'au moins une grandeur propre de véhicule (FE),
**caractérisé en ce que**
au moins une grandeur d'environnement de véhicule (FU) est déterminée et au moins un critère spécifique à la grandeur d'environnement est évalué, dans lequel l'apprentissage (S3) n'est effectué que si l'au moins un critère spécifique à la grandeur d'environnement est satisfait.
